# EUROPEAN PATENT SPECIFICATION

(11) **EP 4 550 146 B1**
(45) Date of publication and mention of the grant of the patent: **20.05.2026**
(21) Application number: 24206093.7
(22) Date of filing: 11.10.2024
(51) Int. Cl.: G06F 11/07

(54) **ERROR SOURCE IDENTIFICATION METHODS AND SYSTEMS**
VERFAHREN UND SYSTEME ZUR FEHLERQUELLENIDENTIFIZIERUNG
PROCÉDÉS ET SYSTÈMES D'IDENTIFICATION DE SOURCE D'ERREUR

(30) Priority: 31.10.2023 IT 202300022971
(43) Date of publication of application: 07.05.2025
(73) Proprietor: STMicroelectronics International N.V., 1228 Plan-les-Ouates, Geneva (CH)
(72) Inventor: SCIBETTA, Roberto, I-20862 Arcore (Monza Brianza) (IT); ROSSI, Luca, I-24034 Cisano Bergamasco (Bergamo) (IT)
(74) Representative: Buzzi, Notaro & Antonielli d'Oulx S.p.A.

(56) References cited:
- EP-A1- 4 206 928

## Description

### Technical field

The description relates to signal processing circuits and devices, such as micro-processor units (briefly, MPUs) and/or micro-controller units (briefly, MCUs) .

One or more embodiments may be applied to automotive functional safety contexts, such as those regulated via the standard known as ISO 26262.

### Background

A fault can be defined as an abnormal condition that can cause an element or an item to fail (e.g., bitflip in a memory register). A fault can manifest itself as an error which can ultimately cause a system failure.

In the context of the automotive safety standards, once a fault is manifested in a peripheral of a single system or combination of systems, the fault is routed to a fault collector and control unit (briefly, FCCU).

The FCCU module is configured to send a specific reaction code to the MCU/MPU cores in order to manage the fault.

The FCCU module operates according to a finite state machine (briefly, FSM) which comprises four states: normal, configuration, alarm, and fault.

In a complex system-on-chip (briefly, SoC), where a wide range of fault channels may be available, the use a plurality of safety mechanisms may become burdensome.

For instance, in order to be compliant with the functional safety concept and the ASIL-D standard, the faults are covered by safety mechanisms. ASIL D, an abbreviation of Automotive Safety Integrity Level D, refers to the classification of initial hazard (injury risk) defined within ISO 26262 and to that standard level of safety measures to apply for countering residual risks. Each safety mechanism sends, in case of failure, a signal to the next stages and those are collected by FCCU in a plurality (e.g., 182) of multiplexed channels. For instance, the cores manage the faults based on the received signals.

Since the routing is rarely one-to-one, existing solutions present the drawback of risking to lose precious information about the fault origin, which in turn can lead to mismanagement of the fault by the cores.

Document EP 4 206 928 A1 discusses an electronic circuit including: a plurality of signal channels; a signal collection circuit configured to determine an action of the electronic circuit based on channel signals (FAULT) from the plurality of signal channels; and a first signal management circuit coupled between the plurality of signal channels and the signal collection circuit, the first signal management circuit including: a set of internal registers, a set of user registers, and a decoder configured to program the set of internal registers based on a content of the set of user registers, where the first signal management circuit is configured to receive the channel signals via the plurality of signal channels, generate first aggregated signals based on the received channel signals and a content of the set of internal registers, and transmitting the first aggregated signals to the signal collection circuit.

### Object and summary

An object of one or more embodiments is to contribute in overcoming the aforementioned drawback.

According to one or more embodiments, that object can be achieved via a method having the features set forth in the claims that follow.

One or more embodiments may relate to a corresponding system-on-chip, SoC which may be mounted on-board a vehicle, such as a battery-powered vehicle.

One or more embodiments may include a computer program product loadable in the memory of at least one processing circuit (e.g., a computer) and including software code portions for executing the steps of the method when the product is run on at least one processing circuit. As used herein, reference to such a computer program product is understood as being equivalent to reference to a computer-readable medium containing instructions for controlling the processing system in order to co-ordinate implementation of the method according to one or more embodiments. Reference to "at least one computer" is intended to highlight the possibility for one or more embodiments to be implemented in modular and/or distributed form.

The claims are an integral part of the technical teaching provided herein with reference to the embodiments.

One or more embodiments facilitate augmenting the quality of information provided to cores, in order to facilitate selecting suitable reactions among the different possibilities in the fastest possible time.

One or more embodiments facilitate retrieving complete information starting from a partial one retrieved from the FCCU module.

One or more embodiments facilitate a customised startup.

One or more embodiments improve detecting possible input faults combinations.

One or more embodiments facilitate a fast response.

One or more embodiments facilitate providing a scalable response, since different versions of the functionality can be derived for more use-specific application.

One or more embodiments facilitate testing activities.

### Brief description of the several views of the drawings

One or more embodiments will now be described, by way of non-limiting example only, with reference to the annexed Figures, wherein:
- Figure 1 is an exemplary diagram of a vehicle equipped with a system as per the present disclosure;
- Figure 2 is an exemplary diagram of a portion of the system exemplified in Figure 1;
- Figure 3 is an exemplary diagram of an evolution over time of signals as exemplified herein;
- Figure 4 is a diagram of a data structure as per the present disclosure;
- Figure 5 is a diagram exemplary of a method as per the present disclosure;
- Figure 6 is a diagram exemplary of a data structure;
- Figure 7 is a diagram of further operations in a method as per the present disclosure,
- Figures 8 to 10 are diagrams exemplary of stored data structures in one or more examples as per the present disclosure.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular conformations, structures, or characteristics may be combined in any adequate way in one or more embodiments.

The references used herein are provided merely for convenience and hence do not define the extent of protection or the scope of the embodiments.

For the sake of simplicity, in the following detailed description a same reference symbol may be used to designate both a node/line in a circuit and a signal which may occur at that node or line.

For the sake of simplicity, one or more embodiments are discussed in the following mainly with reference to an electric road vehicle (Battery Electric Vehicle, BEV), being otherwise understood that such an example is in no way limiting. One or more embodiments can be applied in a similar way to notionally any kind of motorized vehicle, such as hybrid or combustion-engine powered vehicles, for instance.

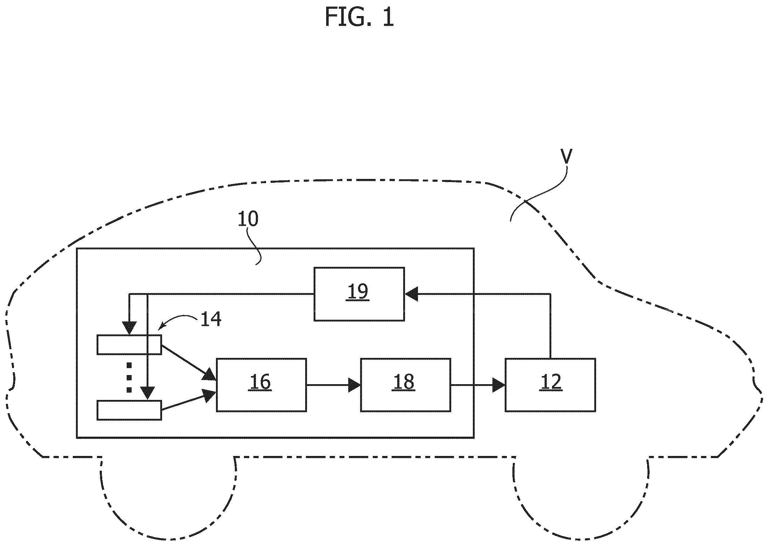

As exemplified in Figure 1, a V vehicle may comprise a central electronic control unit (briefly, ECU) 10 coupled to a set of auxiliary ECUs 12, the central ECU 10 being configured to transfer commands received from a user, e.g., via the accelerator pedal or steering systems of the vehicle V, to a set of actuators via their respective auxiliary ECUs coupled to them.

An auxiliary ECU may comprise a processing unit to produce control signals for the vehicle system and a data storage unit for storing data for exchange with the central ECU, in a manner per se known.

As exemplified in Figure 1, the central ECU comprises a system on chip, SoC 10 comprising:
a plurality of detection circuits 14 coupled to auxiliary ECUs to provide a set of detection signals detect indicative of various status conditions of the systems driven by the auxiliary ECUs (e.g., steering actuators) and/or of the internal status of the ECU (e.g., status of data stored in the memory unit);
a set of collector error modules, CEMs 16 coupled to the plurality of detection circuits 14 to collect the first set of detection signals therefrom, the CEMs in the set of CEMs being configured to apply (logic) signal processing to the received set of detection signals in order to extract information related to the presence of faults and to reduce the number of total signals, the set of CEMs 16 producing a set of error signals as a result of applying (logic) signal processing;
a fault control and collection unit, FCCU 18 coupled to the set of CEMs 16 to receive the second set of detection signals, the FCCU being a hardware IP providing a central capability to control and collect faults reported by the set of CEMs 14 of the SoC 10; faults are reported to the outside world via output pin(s) or internally via a feedback branch 19 in case there is a recovery mechanism provided by the SoC 10.

Specifically, the FCCU offers a mechanism to aggregate error notifications and a configurable means to bring the SoC to a safe state. For instance, error indications are passed from the individual detection components 14 to the FCCU 18 via the CEMs.

For instance, the feedback circuit 19, triggered by the FCCU 18, may comprise:
- an internal feedback mechanism, e.g., alerting any core, and/or
- an external feedback mechanism, e.g., moving some GPIO voltage nodes.

As appreciable to those of skill in the art, the FCCU 18 may be equipped with a finite state machine, FSM logic according to which the unit 18 determines the appropriate action to take in response to the received error signals.

For the sake of simplicity, one or more embodiments are described in the following mainly with reference to an exemplary case in which the set of CEMs 16 comprises two CEMs 161, 162, being otherwise understood that such a number of CEMs is purely exemplary and in no way limiting.

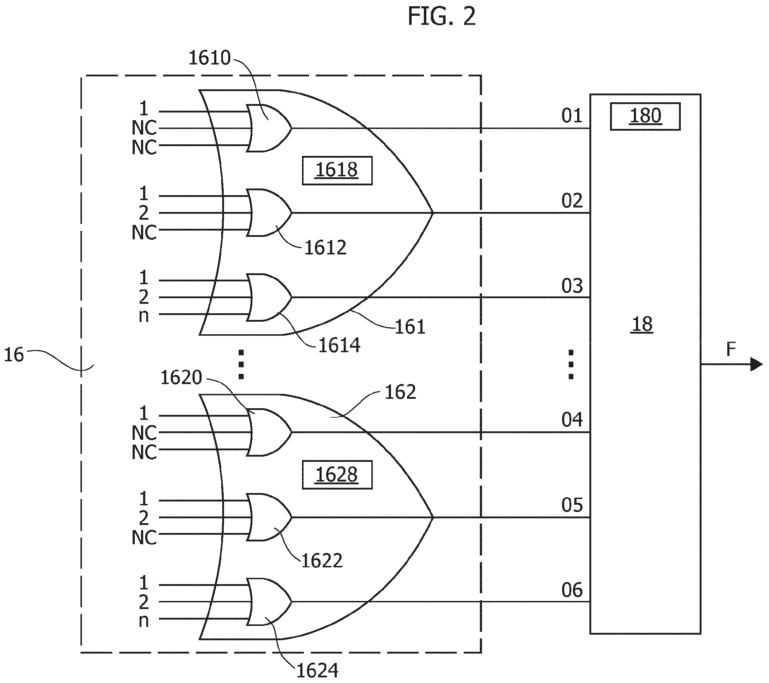

As exemplified in Figure 2, the set of CEMs 16 comprises:
a first CEM circuit 161 comprising a first set of signal processing blocks 1610, 1612, 1614 configured to be coupled to detection circuit blocks 14 to receive detection signals therefrom, the first CEM circuit 161 further comprising a first CEM register 1618 configured to store data related to the ways in which the detection signals are connected and processed by the signal processing blocks in the first set of signal processing blocks 1610, 1612, 1614;
a second CEM circuit 162 comprising a second set of signal processing blocks 1620, 1622, 1624 configured to be coupled to detection circuit blocks 14 to receive detection signals therefrom, the second CEM circuit 162 further comprising a second CEM register 1628 configured to store data related to the ways in which the detection signals are connected and processed by the signal processing blocks in the second set of signal processing blocks 1610, 1612, 1614.

For the sake of simplicity, one or more embodiments are discussed in the following considering an exemplary scenario in which each signal processing circuit block 1610, 1612, 1614, 1620, 1622, 1624, 1628 comprises three input channels, being otherwise understood that such a number of input channels is purely exemplary and in no way limiting.

As exemplified in Figure 2, the CEM circuits 161, 162 may be designed to process a variable number of signals, for instance even a number higher than the number of detected signals from the detection circuits 14. For instance, the first CEM register 1618 may comprise data to configure:
a first signal processing circuit block 1610 of the set of signal processing circuit block 161 to receive a first input signal (indicated as "1" in Figure 2) at a first input node while leaving the remaining input nodes of the first signal processing circuit block 1610 not connected (indicated as "NC" in Figure 2);
a second signal processing circuit block 1612 of the set of signal processing circuit block 161 to receive the first input signal (indicated as "1" in Figure 2) at a first input node, a second detected signal (indicated as "2" in Figure 2) and leaving a third input node of the second signal processing circuit block 1612 not connected (indicated as "NC" in Figure 2);
a third signal processing circuit block 1614 of the set of signal processing circuit block 161 to receive the first input signal (indicated as "1" in Figure 2) at a first input node, a second detected signal (indicated as "2" in Figure 2) and receiving a third detected signal (indicated as "n" in Figure 2) at a third input node of the third signal processing circuit block 1614.

As appreciable to those of skill in the art, the set of CEMs providing a signal processing stage intermediate the detection circuits 14 and the FCCU 18 facilitate to pre-process the signals to provide to the FCCU 18, operating as a sort of "enable" signals for some specific FCCU input channels, for instance.

As exemplified in Figure 2, the FCCU 18 comprises a FCCU register 180 configured to store data related to how to interpret the combination of signals received at input. For instance, this may be in the form of a look-up table that assigns a value to an output signal F based on the value of input signals provided by CEMs 16.

For instance:
the set of detection circuits 14 comprise 990 detection circuits,
the set of CEMs comprises 12 CEM circuit blocks 161, 161,
each CEM 16 may comprise 1761 input nodes, therefore the majority of input nodes of the CEMs may be in the "non-connected" state.

For instance, the FCCU circuit 18 comprises 182 input channels.

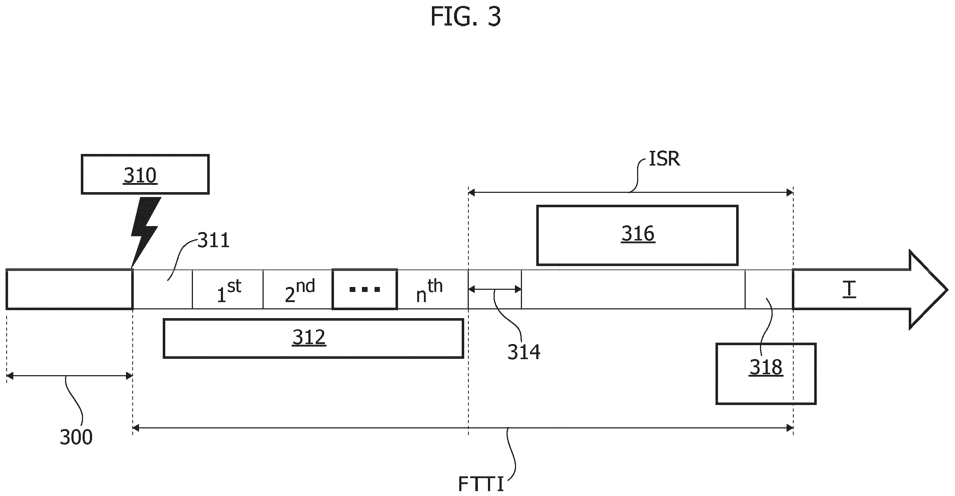

As exemplified in Figure 3, the operation of the SoC 10 exemplified in Figures 1 and 2 may be split in various time blocks:
block 300: the system 10 operates regularly during a normal operation phase;
block 310: a fault event is detected; for instance, a temperature sensor in the set of sensing circuits 14 generates an output voltage that is exceeds the defined thresholds;
block 312: in response to a signal 310 indicative of a fault condition detected by detection circuits 14 being asserted by the FCCU circuit 18, a counter (not visible in Figures 1 and 2) starts measuring a fault tolerant time interval (FTTI, which can last at least 10 ms, where 1 ms = 10⁻³ seconds = 1 millisecond), in which various operations are performed, as discussed next;
block 311: safety checks may be performed by an application;
block 312: software safety mechanisms are checked; in response to lapse of the block 312, an interrupt service routine (briefly, ISR) may be triggered, comprising:
   block 314: detecting the source (that is, the specific subsystem among the auxiliary ECUs 12) of the error signal F received by the FCCU 18,
   block 316: apply counter-measures to correct the error (e.g., in case the fault is a wrong bit in a memory, attempting to rewrite the data bit);
   block 318: cleaning service, that is a reset of FCCU and CEM circuit input nodes.

In conventional SoC arrangements 10, in response to receiving a signal indicative of a fault from the CEMs 16, the FCCU 18 may trigger an interrupt to any core via the feedback branch 19. The is an interest in developing ways to identify the source of error corresponding to the received error signal, as this information may get "lost" in the CEM pre-processing stage 16.

Inventors have observed that it may be possible to quickly identify the error source during the time block 314 exemplified in Figure 3 by using a set of data structures 402, 404 which may be accessed (e.g., from memory 180) in response to the fault detection 310.

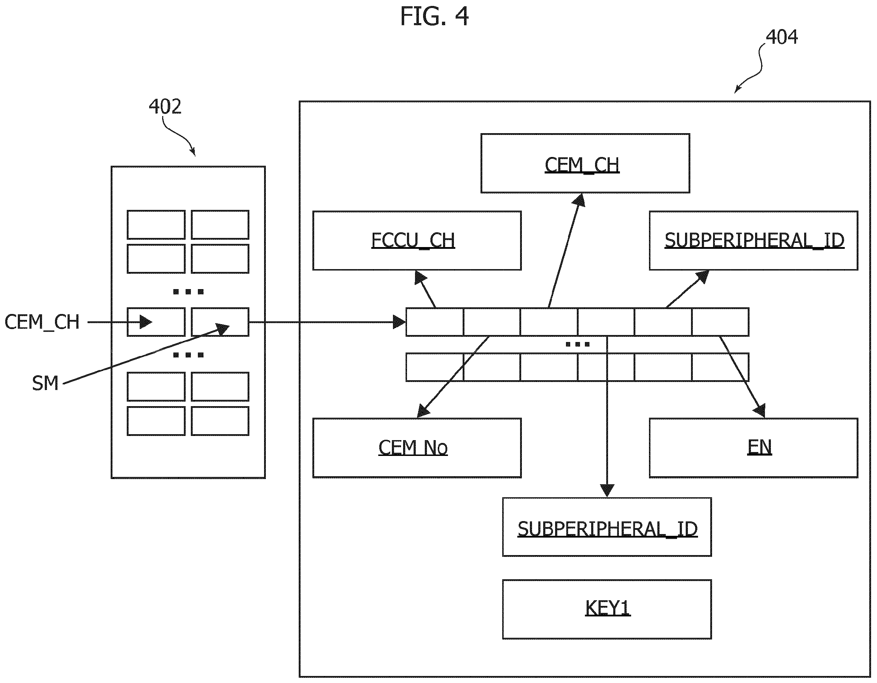

As exemplified in Figure 4, a first data structure 402, such as a first table, comprises:
a first set of items CEM_CH indicative of which of the signal processing circuit blocks 1610, 1612, 1614, 1620, 1622, 1624 of the set of CEM circuits 161, 162 is connected to which FCCU input node or channel FCCU_CH; for instance, each item in the first set of items CEM_CH may be associated to a respective channel in a set of channels FCCU_CH either via its position in the table or, optionally, via a further set of items FCCU_CH paired to the first set of items CEM_CH;
a second set of items SM indicative of a number of input nodes of the signal processing block (e.g., 1610) are actually connected (e.g., only the first input node as exemplified in Figure 2); and
a third set of items KEY comprising IDs of further tables in a second set of data structures 404, as discussed in the following.

As exemplified in Figure 4, a second data structure in the second set of data structures 404, for instance a second table KEY1 containing information regarding the connected nodes (for instance, the first one) of the signal processing block 1610 which is identified as connected to the first FCCU input channel 01, comprises an entry for each "active" CEM channels CEM_No connected to the respective FCCU channel. As exemplified in Figure 4, the data structure further comprises:
a set of FCC channel numbers FCC_CH (e.g., 01) associated to each CEM channel (e.g., 1) of the specific CEM signal processing circuit block (e.g., 1610);
a set of number of CEM circuit (e.g., 161) in which the CEM channel (e.g., 1610) is located,
a set of CEM channel IDs CEM_CH (e.g., 1610),
a set of IDs of associated peripherals of the auxiliary ECUs 12 (e.g., RAM),
optionally, a set of IDs of associated sub-peripherals of the auxiliary ECUs 12 (e.g., the address of the faulty memory cell);
optionally, an enable signal EN, which may be used by other user circuits to enable various functionalities.

As exemplified herein, a method 500 for identifying the source of error in response to detection 14 of an error signal comprises:
block 502: accessing the data stored in the FCCU registers 180 to detect which of the FCCU input channels 01, 02, 03, 04, 05, 06 has received an error signal;
block 504: identifying which signal processing circuit block in the set of signal processing circuit blocks 1610, 1612, 1614, 1620, 1622, 1624 of the set of CEMs 16 is coupled to the identified faulty FCCU input channel using the entries of the first data structure 402;
block 506: by reading the entry "KEY" associated to the entry "CEM_CH" in the first data structure 402, identifying a corresponding data structure (e.g., KEY1) in a second set of data structures 404 that stores further information about the coupling of the identified signal processing circuit block (e.g., 1610) and the detection circuit blocks 14;
block 510: identifying the CEM circuit (e.g., 161) corresponding to the CEM number entry of the accessed second data structure in the second set of data structures 404 and accessing the register of the identified CEM circuit (e.g., 1628)
block 512: access the CEM register (e.g., 1618) of the identified CEM circuit (e.g., 161) to determine the input node and the corresponding error source;
block 514: collect the entry of the second data structure in the set of second data structures 4040 that corresponds to the CEM channel CEM_CH coupled to the identified error source,
block 516: provide the second data structure as an output signal, e.g., as the feedback 19 from the cores 12.

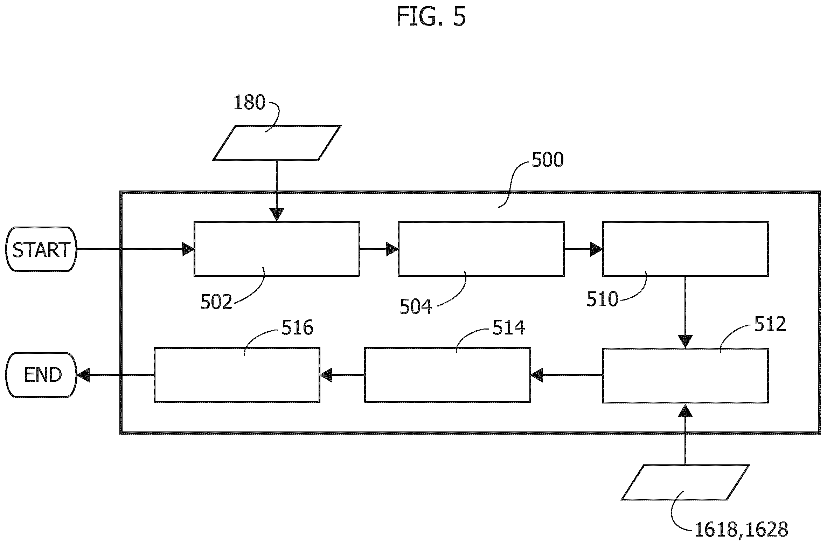

Inventors have observed that a method as exemplified in Figure 5 facilitates performing error source identification with the time block 314 as it is faster to access a plurality of small (in terms of memory size) data structures than to scan all the items of a bigger data structure.

As exemplified in Figure 5, the method may be a computer-implemented method executed by the core 12 in response to receiving an error detection signal.

As exemplified herein, a method comprises:
coupling a set of sensing circuits 14 to a set of electronic devices 12;
sensing, via the sensing circuits, a set of sensing signals S₁, S₂ comprising sensing signals indicative of an operating state of electronic devices in the set of electronic devices;
applying logic signal processing 16 to the set of sensing signals via coupling a set of signal processing channels 1610, 1612, 1614, 1620, 1622, 1624 to the set of sensing circuits and providing a set of logically combined sensing signals as a result,
wherein the logically combined sensing signals are indicative of whether the operating state of the electronic devices in the set of electronic devices is an expected (or correct) operating state or an unexpected (or incorrect) operating state;
providing the logically combined sensing signals in the set of logically combined sensing signals to input channels in a set of input channels 01, 02, 03, 04, 05, 06 of a fault collection and control unit, FCCU 18;
storing 180, 1618, 1628 at least one data structure 402, 404 comprising data related to the way in which the set of input channels of the FCCU are coupled to the set of sensing circuits via the set of signal processing channels 1610, 1612, 1614, 1620, 1622, 1624;
in response to at least one combined sensing signal in the set of combined sensing signals being indicative of the unexpected operating state of the electronic devices in the set of electronic devices:
   identifying 502 the FCCU input channel among the set of input channels of the FCCU from which the at least one combined sensing signal indicative of the unexpected operating state originates;
   accessing 504, 512 the data stored 180, 1618, 1628 in the at least one data structure;
   based on the accessed data, identifying 314, 514 the electronic device in the set of electronic devices producing the unexpected operating status sensing signal;
   providing an interrupt request signal F to the identified electronic device in the set of electronic devices;

For instance, the method comprises performing a feedback action 19 with respect to the identified electronic device in the set of electronic devices, the feedback action including at least one of: ignoring the unexpected operating status, restoring an expected operating state, and storing the unexpected operating status.

As exemplified herein, storing the at least one data structure comprises:
storing a first data structure 402 comprising an ordered list of signal processing channels 1610, 1612, 1614, 1620, 1622, 1624 associated to the input channels of the FCCU and an associated list of pointers to data structures in a further set of data structures 404;
populating the data structures in the further set of data structures with data related to signal processing channels and sensing circuits associated to each input channels of the FCCU.

As exemplified herein, identifying 502 the FCCU input channel among the set of input channels of the FCCU from which the at least one combined sensing signal indicative of the incorrect operating state originates comprises:
storing 180 the values of the logically combined sensing signals in the set of logically combined sensing signals received at respective FCCU input channels in the set of FCCU input channels;
accessing 502 the stored value of the incorrect operating state signal and identifying the FCCU input channel in the set of FCCU input channels coupled to the at least one combined sensing signal in the set of combined sensing signals being indicative of an incorrect operating state of the electronic devices in the set of electronic devices.

As exemplified herein, accessing the data stored in the at least one data structure comprises:
based on the at least one data structure, identifying 504 which signal processing channel in the set of signal processing channels is coupled to the FCCU input channel in the set of FCCU input channels coupled to the at least one combined sensing signal in the set of combined sensing signals being indicative of an incorrect operating state of the electronic devices in the set of electronic devices;
accessing 512 data related to the way in which signal processing channels in the set of signal processing channels are coupled to the set of sensing circuits;
collecting 514 the accessed data that corresponds to the signal processing channel coupled to the identified error source,
providing 516 a data structure indicative of the coupling of the identified electronic device in the set of electronic devices and the identified error source.

As exemplified herein, a computer program product comprises instructions which, when the program is executed by an electronic device 10, 12, cause the electronic device to carry out the method according to the present disclosure.

As exemplified herein, a system on chip, SoC 10 comprises a set of sensing circuits 14 configured to be coupled to a set of electronic devices to sense therefrom a set of sensing signals S₁, S₂ comprising sensing signals indicative of an operating state of electronic devices in the set of electronic devices. For instance, the SoC comprises:
logic signal processing circuitry 16 coupled to the set of sensing signals via a set of signal processing channels 1610, 1612, 1614, 1620, 1622, 1624, the logic signal processing circuitry 16 configured to provide a set of logically combined sensing signals,
wherein the logically combined sensing signals are indicative of whether the operating state of the electronic devices in the set of electronic devices 12 is a correct operating state or an incorrect operating state;
a fault collection and control unit, FCCU coupled to the logic signal processing circuitry to receive logically combined sensing signals in the set of logically combined sensing signals at FCCU input channels in a set of FCCU input channels;
at least one set of registers 180, 1618, 1628 storing at least one data structure 402, 404 comprising data related to the way in which the set of input channels of the FCCU are coupled to the set of sensing circuits via the set of signal processing channels;
processing circuitry configured to, in response to at least one combined sensing signal in the set of combined sensing signals being indicative of an incorrect operating state of the electronic devices in the set of electronic devices:
   identify 502 the FCCU input channel among the set of input channels of the FCCU from which the at least one combined sensing signal indicative of the incorrect operating state originates;
   access 504, 512 the data stored in the at least one data structure;
   based on the accessed data, identify the electronic device in the set of electronic devices producing the incorrect operating status sensing signal;
   provide 516 an interrupt request signal F to the identified electronic device in the set of electronic devices.

As exemplified herein, the processing circuitry is further configured to perform a feedback action 19 with respect to the identified electronic device in the set of electronic devices, the feedback action including at least one of: ignoring the unexpected operating status, restoring an expected operating state, and storing the unexpected operating status.

As exemplified herein, the at least one data structure stored in the at least one set of registers comprises:
a first data structure 402 comprising an ordered list of signal processing channels associated to the input channels of the FCCU and an associated list of pointers to data structures in a further set of data structures,
wherein the data structures in the further set of data structures 404 are populated with data related to signal processing channels and sensing circuits associated to each FCCU input channel in the set of FCCU input channels.

As exemplified herein, the processing circuitry is further configured to, in response to at least one combined sensing signal in the set of combined sensing signals being indicative of an incorrect operating state of the electronic devices in the set of electronic devices:
identify 502 the FCCU input channel among the set of input channels of the FCCU from which the at least one combined sensing signal indicative of the incorrect operating state originates comprises:
store 180 the values of the logically combined sensing signals in the set of logically combined sensing signals received at respective FCCU input channels in the set of FCCU input channels;
access 502 the stored value of the incorrect operating state signal and identifying the FCCU input channel in the set of FCCU input channels coupled to the at least one combined sensing signal in the set of combined sensing signals being indicative of an incorrect operating state of the electronic devices in the set of electronic devices.

As exemplified herein, the processing circuitry is further configured to, in response to at least one combined sensing signal in the set of combined sensing signals being indicative of an incorrect operating state of the electronic devices in the set of electronic devices:
based on the at least one data structure 402, 404, identify 504 which signal processing channels in the set of signal processing channels is coupled to the FCCU input channel in the set of FCCU input channels coupled to the at least one combined sensing signal in the set of combined sensing signals being indicative of an incorrect operating state of the electronic devices in the set of electronic devices;
access 512 data related to the way in which signal processing channels in the set of signal processing channels are coupled to the set of sensing circuits;
collect 514 the accessed data that corresponds to the signal processing channel coupled to the identified error source, and
provide 516 a data structure indicative of the coupling of the identified electronic device in the set of electronic devices and the identified error source.

As exemplified herein, a vehicle V comprises:
a system on chip, SoC 10 according to the present disclosure,
a set of electronic devices 12 coupled to the SoC;
a set of actuators configured to operate the vehicle based on signals F, D exchanged among the set of electronic devices and the SoC.

As appreciable to those of skill in the art, the signals provided by the set of CEM circuits 16 at the corresponding FCCU input channels 01, 02, 03, 04, 05, 06 may be stored in respective entries in the FCCU register 180 according to a specific data structure as they may be classified as belonging to a category selected out of normal, alert and fault.

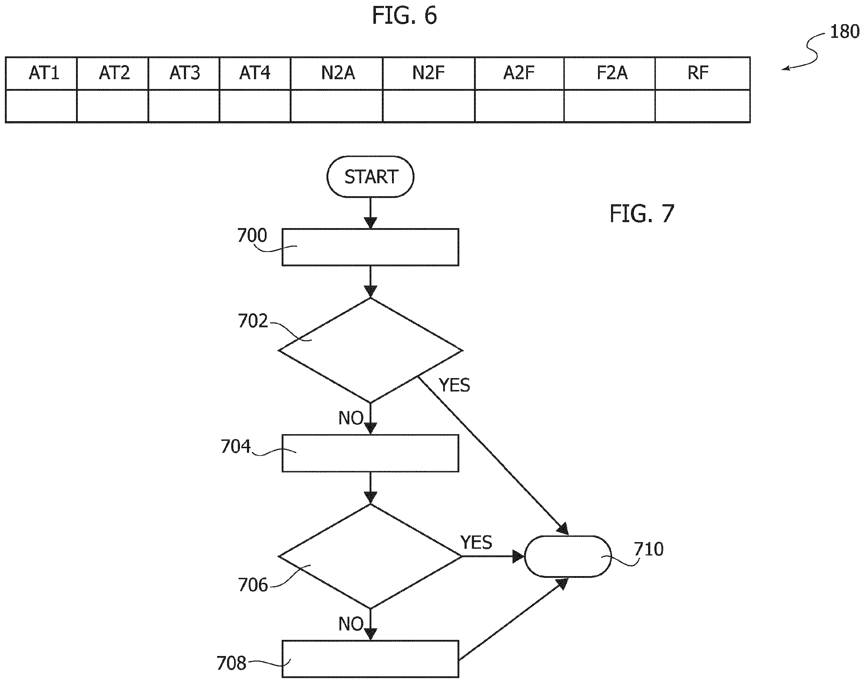

As exemplified in Figure 6, the data structure for a data entry stored in the FCCU register 180 may comprise a plurality of portions (or registers), such as, for instance:
a set of register portions N2A, N2F, F2A, A2F, also known as "frozen registers", comprising a normal-to-alert portion N2A, a normal-to-fault portion N2F, a fault-to-normal portion F2A, an alert-to-fault portion A2F;
a set of timer registers AT1, AT2, AT3, AT4, for instance comprising a first timer register AT1, a second timer register AT2, a third timer register AT3 and a fourth timer register AT4, the timer registers in the set of timer registers T1, T2, T3, T4 being configured to be activated in case the normal-to-alert portion N2A comprises a "non-assigned" state (e.g., fixed to be equal to hexadecimal string 0xFF);
a RF register portion comprising a sub-register for each of the input channels to the FCCU.

As exemplified in Figure 7, a method of accessing the FCCU register 180 to identify the channel source that has triggered the error signal detected at the FCCU 18, comprises:
block 700: access frozen registers N2A, N2F, F2A, A2F and check whether only one of the registers stores data related to the error channel or whether more than one register comprises data related to a plurality of faults;
block 704: in response to the detection of multiple register portions storing error-related data among the register portions in the set of register portions N2A, N2F, F2A, A2F, access the data stored in the first timer register T1 and the second timer register T2 and identify the register portion for which the timer count is lower (e.g., second register indicates that the data stored in normal-to-fault portion N2F was stored earlier than the one stored in the alert-to-fault portion A2F);
block 706: in case the timers show a same timing or it is not possible to directly assign the data stored in the register to one of the fault channels, there is a priority mechanism based on an index number associated to the various channels, e.g., assigning higher priority to lower index numbers in case of down-counting alarm timer registers;
block 710: the channel detected by reading the register portions according to the different scenarios 702, 706 is provided to user circuits.

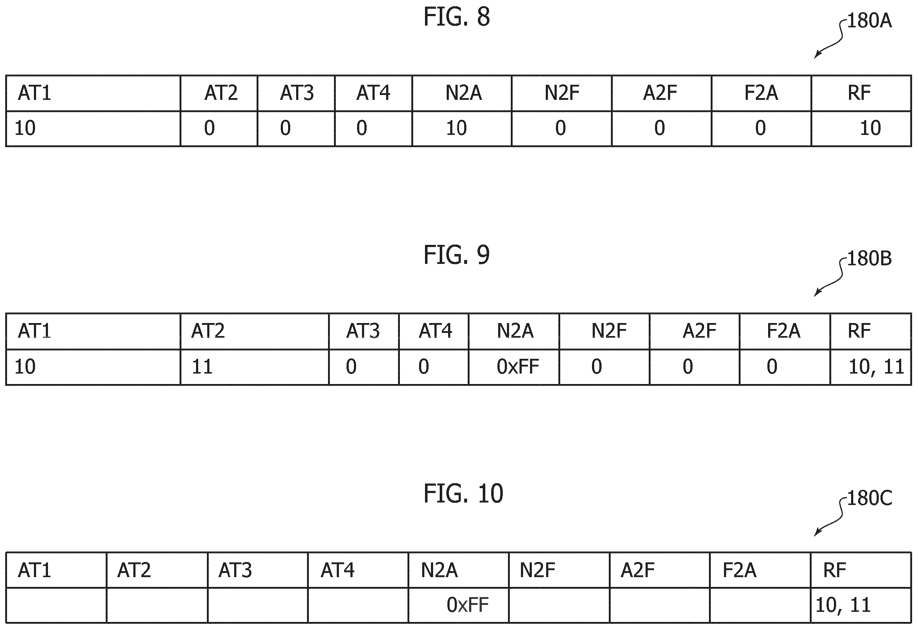

Figures 8 to 10 are diagrams exemplary of data structures 180A, 180B, 180C in various scenarios of the method exemplified in Figure 7.

As exemplified in Figure 8, in case a single fault is detected, the register N2A in data structure 180A stores the information of the channel from which the fault originated and the method comprises operations in blocks 700, 702 and 710 exemplified in Figure 7.

As exemplified in Figures 9 and 10, in case a plurality of faults is detected, the frozen register of data structure 180B accessed in block 700 of the method exemplified in Figure 7 does not provide a clear indication of which channel originated the fault.

As exemplified in Figure 9, alarm timer registers AT1, AT2, AT3, AT4 in data structure 180B are accessed in block 706 exemplified in Figure 7.

For instance, as the second alarm timer AT2 comprises a value greater than the first alarm timer AT1, in the exemplary scenario of down-counting or backwards counting timers, the channel that is considered to have generated the fault is the one linked to the first alarm timer AT1.

As exemplified in Figure 10, conversely if the accessed alarm timer registers AT1, AT2, AT3, AT4 cannot be relied upon to determine a priority order of detected multiple faults, as in data structure 180C, the method comprises accessing RF registers at step 708 of the method exemplified in Figure 7. For instance, a priority may be assigned to the "lowest" channel value 10 found in the RF register, as the hardware may be configured to associate a higher critical value to faults having a lower FCCU channel number.

It will be otherwise understood that the various individual implementing options exemplified throughout the figures accompanying this description are not necessarily intended to be adopted in the same combinations exemplified in the figures. One or more embodiments may thus adopt these (otherwise non-mandatory) options individually and/or in different combinations with respect to the combination exemplified in the accompanying figures.

Without prejudice to the underlying principles, the details and embodiments may vary, even significantly, with respect to what has been described by way of example only, without departing from the extent of protection. The extent of protection is defined by the annexed claims.

## Claims

1. A method (500), comprising:
coupling a set of sensing circuits (14) to a set of electronic devices (12);
sensing, via the sensing circuits (14), a set of sensing signals (S₁, S₂) comprising sensing signals indicative of an operating state of electronic devices in the set of electronic devices (12);
applying logic signal processing (16) to the set of sensing signals (S₁, S₂) via coupling a set of signal processing channels (1610, 1612, 1614, 1620, 1622, 1624) to the set of sensing circuits (14) and providing a set of logically combined sensing signals as a result,
wherein the logically combined sensing signals are indicative of whether the operating state of the electronic devices in the set of electronic devices (12) is an expected operating state or an unexpected operating state;
providing the logically combined sensing signals in the set of logically combined sensing signals to input channels in a set of input channels (01, 02, 03, 04, 05, 06) of a fault collection and control unit, FCCU (18);
storing (180, 1618, 1628) at least one data structure (402, 404) comprising data related to the way in which the set of input channels (01, 02, 03, 04, 05, 06) of the FCCU (18) are coupled to the set of sensing circuits (14) via the set of signal processing channels (1610, 1612, 1614, 1620, 1622, 1624);
in response to at least one combined sensing signal in the set of combined sensing signals being indicative of the unexpected operating state of the electronic devices in the set of electronic devices (12):
identifying (502) the FCCU input channel among the set of input channels (01, 02, 03, 04, 05, 06) of the FCCU (18) from which the at least one combined sensing signal indicative of the unexpected operating state originates;
accessing (504, 512) the data stored (180, 1618, 1628) in the at least one data structure (402, 404);
based on the accessed data, identifying (314, 514) the electronic device in the set of electronic devices (12) producing the unexpected operating status sensing signal, and
providing an interrupt request signal (F) to the identified electronic device in the set of electronic devices (12);
wherein storing (180, 1618, 1628) the at least one data structure (402, 404) comprises:
storing a first data structure (402) comprising an ordered list of signal processing channels (1610, 1612, 1614, 1620, 1622, 1624) associated to the input channels (01, 02, 03, 04, 05, 06) of the FCCU (18) and an associated list of pointers to data structures in a further set of data structures (404), and
populating the data structures in the further set of data structures (404) with data related to signal processing channels (1610, 1612, 1614, 1620, 1622, 1624) and sensing circuits (14) associated to each input channels (01, 02, 03, 04, 05, 06) of the FCCU (18).

2. The method of claim 1, comprising:
performing a feedback action (19) with respect to the identified electronic device in the set of electronic devices (12), the feedback action (19) including at least one of: ignoring the unexpected operating status, restoring an expected operating state, and storing the unexpected operating status.

3. The method of claim 1 or claim 2, wherein identifying (502) the FCCU input channel among the set of input channels (01, 02, 03, 04, 05, 06) of the FCCU (18) from which the at least one combined sensing signal indicative of the unexpected operating state originates comprises:
storing (180) the values of the logically combined sensing signals in the set of logically combined sensing signals received at respective FCCU input channels in the set of FCCU input channels (01, 02, 03, 04, 05, 06);
accessing (502) the stored value (180) of the unexpected operating state signal and identifying the FCCU input channel in the set of FCCU input channels (01, 02, 03, 04, 05, 06) coupled to the at least one combined sensing signal in the set of combined sensing signals being indicative of an unexpected operating state of the electronic devices in the set of electronic devices (12).

4. The method of any one of the previous claims, wherein accessing (504, 512, 512) the data stored (180, 1618, 1628) in the at least one data structure (402, 404) comprises:
based on the at least one data structure (402, 404), identifying (504) which signal processing channel in the set of signal processing channels (1610, 1612, 1614, 1620, 1622, 1624) is coupled to the FCCU input channel in the set of FCCU input channels (01, 02, 03, 04, 05, 06) coupled to the at least one combined sensing signal in the set of combined sensing signals being indicative of an unexpected operating state of the electronic devices in the set of electronic devices (12);
accessing (512) data related to the way in which signal processing channels in the set of signal processing channels (1610, 1612, 1614, 1620, 1622, 1624) are coupled to the set of sensing circuits (14);
collecting (514) the accessed data that corresponds to the signal processing channel coupled to the identified error source,
providing (516) a data structure indicative of the coupling of the identified electronic device in the set of electronic devices (12) and the identified error source.

5. A computer program product comprising instructions which, when the program is executed by an electronic device (10, 12), cause the electronic device (10, 12) to carry out the method according to any one of claims 1 to 4.

6. A system on chip, SoC (10) comprising:
a set of sensing circuits (14) configured to be coupled to a set of electronic devices (12) to sense therefrom a set of sensing signals (S₁, S₂) comprising sensing signals indicative of an operating state of electronic devices in the set of electronic devices (12);
logic signal processing circuitry (16) coupled to the set of sensing signals (S₁, S₂) via a set of signal processing channels (1610, 1612, 1614, 1620, 1622, 1624), the logic signal processing circuitry (16) configured to provide a set of logically combined sensing signals,
wherein the logically combined sensing signals are indicative of whether the operating state of the electronic devices in the set of electronic devices (12) is an expected operating state or an unexpected operating state;
a fault collection and control unit, FCCU (18) coupled to the logic signal processing circuitry (16) to receive logically combined sensing signals in the set of logically combined sensing signals at FCCU input channels in a set of FCCU input channels (01, 02, 03, 04, 05, 06);
at least one set of registers (180, 1618, 1628) storing at least one data structure (402, 404) comprising data related to the way in which the set of input channels (01, 02, 03, 04, 05, 06) of the FCCU (18) are coupled to the set of sensing circuits (14) via the set of signal processing channels (1610, 1612, 1614, 1620, 1622, 1624);
processing circuitry configured to, in response to at least one combined sensing signal in the set of combined sensing signals being indicative of an unexpected operating state of the electronic devices in the set of electronic devices (12):
identify (502) the FCCU input channel among the set of input channels (01, 02, 03, 04, 05, 06) of the FCCU (18) from which the at least one combined sensing signal indicative of the unexpected operating state originates;
access (504, 512, 512) the data stored (180, 1618, 1628) in the at least one data structure (402, 404) ;
based on the accessed data, identify (314, 514) the electronic device in the set of electronic devices (12) producing the unexpected operating status sensing signal;
provide (516) an interrupt request signal (F) to the identified electronic device in the set of electronic devices (12),
wherein the at least one data structure (402, 404) stored in the at least one set of registers (180, 1618, 1628) comprises a first data structure (402) comprising an ordered list of signal processing channels (1610, 1612, 1614, 1620, 1622, 1624) associated to the input channels (01, 02, 03, 04, 05, 06) of the FCCU (18) and an associated list of pointers to data structures in a further set of data structures (404),
wherein the data structures in the further set of data structures (404) are populated with data related to signal processing channels (1610, 1612, 1614, 1620, 1622, 1624) and sensing circuits (14) associated to each FCCU input channel in the set of FCCU input channels (01, 02, 03, 04, 05, 06).

7. The SoC (10) of claim 6, wherein said processing circuitry is further configured to perform a feedback action (19) with respect to the identified electronic device in the set of electronic devices (12), the feedback action (19) including at least one of: ignoring the unexpected operating status, restoring an expected operating state, and storing the unexpected operating status.

8. The SoC (10) of claim 6 or claim 7, wherein the processing circuitry is further configured to, in response to at least one combined sensing signal in the set of combined sensing signals being indicative of an unexpected operating state of the electronic devices in the set of electronic devices (12):
identify (502) the FCCU input channel among the set of input channels (01, 02, 03, 04, 05, 06) of the FCCU (18) from which the at least one combined sensing signal indicative of the unexpected operating state originates comprises:
store (180) the values of the logically combined sensing signals in the set of logically combined sensing signals received at respective FCCU input channels in the set of FCCU input channels (01, 02, 03, 04, 05, 06);
access (502) the stored value (180) of the unexpected operating state signal and identifying the FCCU input channel in the set of FCCU input channels (01, 02, 03, 04, 05, 06) coupled to the at least one combined sensing signal in the set of combined sensing signals being indicative of an unexpected operating state of the electronic devices in the set of electronic devices (12).

9. The SoC (10) of any one of claims 7 to 8, wherein the processing circuitry is further configured to, in response to at least one combined sensing signal in the set of combined sensing signals being indicative of the unexpected operating state of the electronic devices in the set of electronic devices (12):
based on the at least one data structure (402, 404), identify (504) which signal processing channel in the set of signal processing channels (1610, 1612, 1614, 1620, 1622, 1624) is coupled to the FCCU input channel in the set of FCCU input channels (01, 02, 03, 04, 05, 06) coupled to the at least one combined sensing signal in the set of combined sensing signals being indicative of the unexpected operating state of the electronic devices in the set of electronic devices (12);
access (512) data related to the way in which signal processing channels in the set of signal processing channels (1610, 1612, 1614, 1620, 1622, 1624) are coupled to the set of sensing circuits (14);
collect (514) the accessed data that corresponds to the signal processing channel coupled to the identified error source, and
provide (516) a data structure indicative of the coupling of the identified electronic device in the set of electronic devices (12) and the identified error source.

10. A vehicle (V), comprising:
a system on chip, SoC (10) according to any one of claims 6 to 9,
a set of electronic devices (12) coupled to the SoC (10);
a set of actuators configured to operate the vehicle (V) based on signals (F, D) exchanged among the set of electronic devices (12) and the SoC (10).

## Patentansprüche

1. Verfahren (500), das Folgendes umfasst:
Koppeln eines Satzes von Sensorschaltungen (14) an einen Satz von elektronischen Vorrichtungen (12);
Erfassen eines Satzes von Sensorsignalen (S₁, S₂), die Sensorsignale enthalten, die einen Betriebszustand der elektronischen Vorrichtungen in dem Satz von elektronischen Vorrichtungen (12) angeben, über die Sensorschaltungen (14);
Anwenden einer logischen Signalverarbeitung (16) auf den Satz von Sensorsignalen (S₁, S₂) durch Kopplung eines Satzes von Signalverarbeitungskanälen (1610, 1612, 1614, 1620, 1622, 1624) an den Satz von Sensorschaltungen (14) und Bereitstellung eines Satzes logisch kombinierter Sensorsignale als Ergebnis,
wobei die logisch kombinierten Sensorsignale angeben, ob der Betriebszustand der elektronischen Vorrichtungen in dem Satz von elektronischen Vorrichtungen (12) ein erwarteter Betriebszustand oder ein unerwarteter Betriebszustand ist;
Bereitstellen der logisch kombinierten Sensorsignale in dem Satz von logisch kombinierten Sensorsignalen an Eingangskanäle in einem Satz von Eingangskanälen (01, 02, 03, 04, 05, 06) einer Fehlersammel- und Steuereinheit, FCCU (18);
Speichern (180, 1618, 1628) mindestens einer Datenstruktur (402, 404), die Daten umfasst, die sich darauf beziehen, wie der Satz von Eingangskanälen (01, 02, 03, 04, 05, 06) der FCCU (18) über den Satz von Signalverarbeitungskanälen (1610, 1612, 1614, 1620, 1622, 1624) mit dem Satz von Sensorschaltungen (14) gekoppelt ist;
wobei als Reaktion darauf, das mindestens ein kombiniertes Sensorsignal in dem Satz von kombinierten Sensorsignalen den unerwarteten Betriebszustand der elektronischen Vorrichtungen in dem Satz von elektronischen Vorrichtung (12) angibt:
Identifizieren (502) des FCCU-Eingangskanals unter dem Satz von Eingangskanälen (01, 02, 03, 04, 05, 06) der FCCU (18), von dem das mindestens eine kombinierte Sensorsignal, das den unerwarteten Betriebszustand angibt, stammt;
Aufrufen (504, 512) der in der mindestens einen Datenstruktur (402, 404) gespeicherten Daten (180, 1618, 1628);
auf der Grundlage der abgerufenen Daten, Identifizieren (314, 514) der elektronischen Vorrichtung in dem Satz von elektronischen Vorrichtungen (12), die das unerwartete Betriebszustands-Sensorsignal erzeugt, und
Bereitstellen eines Unterbrechungsanforderungssignals (F) an die identifizierte elektronische Vorrichtung in dem Satz von elektronischen Vorrichtungen (12);
wobei das Speichern (180, 1618, 1628) der mindestens einen Datenstruktur (402, 404) Folgendes umfasst:
Speichern einer ersten Datenstruktur (402), die eine geordnete Liste von Signalverarbeitungskanälen (1610, 1612, 1614, 1620, 1622, 1624), die den Eingangskanälen (01, 02, 03, 04, 05, 06) der FCCU (18) zugeordnet sind, und eine zugehörige Liste von Zeigern auf Datenstrukturen in einem weiteren Satz von Datenstrukturen (404) umfasst, und
Füllen der Datenstrukturen in dem weiteren Satz von Datenstrukturen (404) mit Daten, die sich auf Signalverarbeitungskanäle (1610, 1612, 1614, 1620, 1622, 1624) und Sensorschaltungen (14) beziehen, die jedem der Eingangskanäle (01, 02, 03, 04, 05, 06) der FCCU (18) zugeordnet sind.

2. Verfahren nach Anspruch 1, das Folgendes umfasst:
Durchführen einer Rückkopplungsaktion (19) in Bezug auf die identifizierte elektronische Vorrichtung in dem Satz von elektronischen Vorrichtungen (12), wobei die Rückkopplungsaktion (19) mindestens eines von Folgendem einschließt: Ignorieren des unerwarteten Betriebszustands, Wiederherstellen eines erwarteten Betriebszustands und Speichern des unerwarteten Betriebszustands.

3. Verfahren nach Anspruch 1 oder 2, wobei das Identifizieren (502) des FCCU-Eingangskanals unter dem Satz von Eingangskanälen (01, 02, 03, 04, 05, 06) der FCCU (18), aus dem das mindestens eine kombinierte Senorsignal, das den unerwarteten Betriebszustand angibt, stammt, Folgendes umfasst:
Speichern (180) der Werte der logisch kombinierten Sensorsignale in dem Satz von logisch kombinierten Sensorsignalen, die an den jeweiligen FCCU-Eingangskanälen in dem Satz von FCCU-Eingangskanälen (01, 02, 03, 04, 05, 06) empfangen werden;
Aufrufen (502) des gespeicherten Wertes (180) des unerwarteten Betriebszustandssignals und Identifizieren des FCCU-Eingangskanals in dem Satz von FCCU-Eingangskanälen (01, 02, 03, 04, 05, 06), der mit dem mindestens einen kombinierten Sensorsignal in dem Satz von kombinierten Sensorsignalen gekoppelt ist, das einen unerwarteten Betriebszustand der elektronischen Vorrichtungen in dem Satz von elektronischen Vorrichtungen (12) angibt.

4. Verfahren nach einem der vorhergehenden Ansprüche, wobei das Aufrufen (504, 512, 512) der in der mindestens einen Datenstruktur (402, 404) gespeicherten Daten (180, 1618, 1628) Folgendes umfasst:
auf der Grundlage der mindestens einen Datenstruktur (402, 404), Identifizieren (504), welcher Signalverarbeitungskanal in dem Satz von Signalverarbeitungskanälen (1610, 1612, 1614, 1620, 1622, 1624) mit dem FCCU-Eingangskanal in dem Satz von FCCU-Eingangskanälen (01, 02, 03, 04, 05, 06) gekoppelt ist, der mit dem mindestens einen kombinierten Sensorsignal in dem Satz von kombinierten Sensorsignalen gekoppelt ist, das einen unerwarteten Betriebszustand der elektronischen Vorrichtungen in dem Satz von elektronischen Vorrichtungen (12) angibt;
Aufrufen (512) von Daten, die sich darauf beziehen, wie Signalverarbeitungskanäle in dem Satz von Signalverarbeitungskanälen (1610, 1612, 1614, 1620, 1622, 1624) mit dem Satz von Sensorschaltungen (14) gekoppelt sind;
Sammeln (514) der aufgerufenen Daten, die dem mit der identifizierten Fehlerquelle gekoppelten Signalverarbeitungskanal entsprechen,
Bereitstellen (516) einer Datenstruktur, die die Kopplung der identifizierten elektronischen Vorrichtung in dem Satz von elektronischen Vorrichtungen (12) und der identifizierten Fehlerquelle angibt.

5. Computerprogrammprodukt, das Anweisungen umfasst, die, wenn das Programm von einer elektronischen Vorrichtung (10, 12) ausgeführt wird, die elektronische Vorrichtung (10, 12) dazu veranlassen, das Verfahren nach einem der Ansprüche 1 bis 4 durchzuführen.

6. System-on-Chip, SoC (10), das Folgendes umfasst:
einen Satz von Sensorschaltungen (14), die so konfiguriert sind, dass sie mit einem Satz von elektronischen Vorrichtungen (12) gekoppelt werden können, um daraus einen Satz von Sensorsignalen (S₁, S₂) zu erfassen, die Sensorsignale umfassen, die einen Betriebszustand der elektronischen Vorrichtung in dem Satz von elektronischen Vorrichtungen (12) angeben;
eine logische Signalverarbeitungsschaltung (16), die über einen Satz von Signalverarbeitungskanälen (1610, 1612, 1614, 1620, 1622, 1624) mit dem Satz von Sensorsignalen (S₁, S₂) gekoppelt ist, wobei die logische Signalverarbeitungsschaltung (16) so konfiguriert ist, dass sie einen Satz von logisch kombinierten Sensorsignalen bereitstellt,
wobei die logisch kombinierten Sensorsignale angeben, ob der Betriebszustand der elektronischen Vorrichtungen in dem Satz von elektronischen Vorrichtungen (12) ein erwarteter Betriebszustand oder ein unerwarteter Betriebszustand ist;
eine Fehlersammel- und Steuereinheit, FCCU (18), die mit der logischen Signalverarbeitungsschaltung (16) gekoppelt ist, um logisch kombinierte Sensorsignale aus dem Satz von logisch kombinierten Sensorsignalen an den FCCU-Eingangskanälen in einem Satz von FCCU-Eingangskanälen (01, 02, 03, 04, 05, 06) zu empfangen;
mindestens einen Satz von Registern (180, 1618, 1628), die mindestens eine Datenstruktur (402, 404) speichern, die Daten umfasst, die sich darauf beziehen, wie der Satz von Eingangskanälen (01, 02, 03, 04, 05, 06) der FCCU (18) über den Satz von Signalverarbeitungskanälen (1610, 1612, 1614, 1620, 1622, 1624) mit dem Satz von Sensorschaltungen (14) gekoppelt ist;
eine Verarbeitungsschaltung, die so konfiguriert ist, dass sie als Reaktion darauf, das mindestens ein kombiniertes Sensorsignal in dem Satz von kombinierten Sensorsignalen einen unerwarteten Betriebszustand der elektronischen Vorrichtungen in dem Satz von elektronischen Vorrichtung (12) angibt:
Identifizieren (502) des FCCU-Eingangskanals unter dem Satz von Eingangskanälen (01, 02, 03, 04, 05, 06) der FCCU (18), von dem das mindestens eine kombinierte Sensorsignal, das den unerwarteten Betriebszustand angibt, stammt;
Aufrufen (504, 512) der in der mindestens einen Datenstruktur (402, 404) gespeicherten Daten (180, 1618, 1628);
auf der Grundlage der abgerufenen Daten, Identifizieren (314, 514) der elektronischen Vorrichtung in dem Satz von elektronischen Vorrichtungen (12), das das unerwartete Betriebszustands-Sensorsignal erzeugt;
Bereitstellen (516) eines Unterbrechungsanforderungssignals (F) an die identifizierte elektronische Vorrichtung in dem Satz von elektronischen Vorrichtungen (12),
wobei die mindestens eine in dem mindestens einen Satz von Registern (180, 1618, 1628) gespeicherte Datenstruktur (402, 404) eine erste Datenstruktur (402) umfasst, die eine geordnete Liste von Signalverarbeitungskanälen (1610, 1612, 1614, 1620, 1622, 1624), die den Eingangskanälen (01, 02, 03, 04, 05, 06) der FCCU (18) zugeordnet ist, und eine zugehörige Liste von Zeigern auf Datenstrukturen in einem weiteren Satz von Datenstrukturen (404) umfasst,
wobei die Datenstrukturen in dem weiteren Satz von Datenstrukturen (404) mit Daten gefüllt werden, die sich auf Signalverarbeitungskanäle (1610, 1612, 1614, 1620, 1622, 1624) und Sensorschaltungen (14) beziehen, die jedem FCCU-Eingangskanal in dem Satz von FCCU-Eingangskanälen (01, 02, 03, 04, 05, 06) zugeordnet sind.

7. SoC (10) nach Anspruch 6, wobei die Verarbeitungsschaltung ferner so konfiguriert ist, dass sie eine Rückkopplungsaktion (19) in Bezug auf die identifizierte elektronische Vorrichtung in dem Satz von elektronischen Vorrichtungen (12) durchführt, wobei die Rückkopplungsaktion (19) mindestens eines von Folgendem einschließt: Ignorieren des unerwarteten Betriebszustands, Wiederherstellen eines erwarteten Betriebszustands und Speichern des unerwarteten Betriebszustands.

8. SoC (10) nach Anspruch 6 oder Anspruch 7, wobei die Verarbeitungsschaltung ferner so konfiguriert ist, dass sie als Reaktion darauf, dass mindestens ein kombiniertes Sensorsignal in dem Satz von kombinierten Sensorsignalen einen unerwarteten Betriebszustand der elektronischen Vorrichtung in dem Satz von elektronischen Vorrichtungen (12) angibt:
das Identifizieren (502) des FCCU-Eingangskanals unter dem Satz von Eingangskanälen (01, 02, 03, 04, 05, 06) der FCCU (18), von dem das mindestens eine kombinierte Sensorsignal, das den unerwarteten Betriebszustand angibt, stammt, Folgendes umfasst:
Speichern (180) der Werte der logisch kombinierten Sensorsignale in dem Satz von logisch kombinierten Sensorsignalen, die an den jeweiligen FCCU-Eingangskanälen in dem Satz von FCCU-Eingangskanälen (01, 02, 03, 04, 05, 06) empfangen werden;
Aufrufen (502) des gespeicherten Wertes (180) des unerwarteten Betriebszustandssignals und Identifizieren des FCCU-Eingangskanals in dem Satz von FCCU-Eingangskanälen (01, 02, 03, 04, 05, 06), der mit dem mindestens einen kombinierten Sensorsignal in dem Satz von kombinierten Sensorsignalen gekoppelt ist, das einen unerwarteten Betriebszustand der elektronischen Vorrichtungen in dem Satz von elektronischen Vorrichtungen (12) angibt.

9. SoC (10) nach einem der Ansprüche 7 bis 8, wobei die Verarbeitungsschaltung ferner so konfiguriert ist, dass sie als Reaktion darauf, dass mindestens ein kombiniertes Sensorsignal in dem Satz von kombinierten Sensorsignalen einen unerwarteten Betriebszustand der elektronischen Vorrichtung in dem Satz von elektronischen Vorrichtungen (12) angibt:
auf der Grundlage von mindestens einer Datenstruktur (402, 404), Identifizieren (504), welcher Signalverarbeitungskanal in dem Satz von Signalverarbeitungskanälen (1610, 1612, 1614, 1620, 1622, 1624) mit dem FCCU-Eingangskanal in dem Satz von FCCU-Eingangskanälen (01, 02, 03, 04, 05, 06) gekoppelt ist, der mit dem mindestens einen kombinierten Sensorsignal in dem Satz von kombinierten Sensorsignalen gekoppelt ist, das den unerwarteten Betriebszustand der elektronischen Vorrichtungen in dem Satz von elektronischen Vorrichtungen (12) angibt;
Aufrufen (512) von Daten, die sich darauf beziehen, wie Signalverarbeitungskanäle in dem Satz von Signalverarbeitungskanälen (1610, 1612, 1614, 1620, 1622, 1624) mit dem Satz von Sensorschaltungen (14) gekoppelt sind;
Sammeln (514) der aufgerufenen Daten, die dem mit der identifizierten Fehlerquelle gekoppelten Signalverarbeitungskanal entsprechen, und
Bereitstellen (516) einer Datenstruktur, die die Kopplung der identifizierten elektronischen Vorrichtung in dem Satz von elektronischen Vorrichtungen (12) und der identifizierten Fehlerquelle angibt.

10. Fahrzeug (V), umfassend:
ein System-on-Chip, SoC (10), nach einem der Ansprüche 6 bis 9,
einen Satz von elektronischen Vorrichtungen (12), die mit dem SoC (10) gekoppelt sind;
einen Satz von Stellgliedern, die auf der Grundlage von Signalen (F, D), die zwischen dem Satz von elektronischen Vorrichtung (12) und dem SoC (10) ausgetauscht werden, für den Betrieb des Fahrzeugs (V) konfiguriert sind.

## Revendications

1. Procédé (500), comprenant :
le couplage d'un ensemble de circuits de détection (14) à un ensemble de dispositifs électroniques (12) ;
la détection, via les circuits de détection (14), d'un ensemble de signaux de détection (S₁, S₂) comprenant des signaux de détection indicatifs d'un état de fonctionnement de dispositifs électroniques dans l'ensemble de dispositifs électroniques (12) ;
l'application d'un traitement de signal logique (16) à l'ensemble de signaux de détection (S₁, S₂) via le couplage d'un ensemble de canaux de traitement de signal (1610, 1612, 1614, 1620, 1622, 1624) à l'ensemble de circuits de détection (14) et la fourniture d'un ensemble de signaux de détection logiquement combinés comme résultat,
dans lequel les signaux de détection logiquement combinés indiquent si l'état de fonctionnement des dispositifs électroniques dans l'ensemble de dispositifs électroniques (12) est un état de fonctionnement attendu ou un état de fonctionnement inattendu ;
la fourniture des signaux de détection logiquement combinés dans l'ensemble de signaux de détection logiquement combinés à des canaux d'entrée dans un ensemble de canaux d'entrée (01, 02, 03, 04, 05, 06) d'une unité de collecte et de contrôle de défaillance, FCCU (18) ;
le stockage (180, 1618, 1628) d'au moins une structure de données (402, 404) comprenant des données relatives à la manière dont l'ensemble de canaux d'entrée (01, 02, 03, 04, 05, 06) de la FCCU (18) sont couplés à l'ensemble de circuits de détection (14) via l'ensemble de canaux de traitement de signal (1610, 1612, 1614, 1620, 1622, 1624) ;
en réponse au fait qu'au moins un signal de détection combiné dans l'ensemble de signaux de détection combinés est indicatif de l'état de fonctionnement inattendu des dispositifs électroniques dans l'ensemble de dispositifs électroniques (12) :
l'identification (502) du canal d'entrée de FCCU parmi l'ensemble de canaux d'entrée (01, 02, 03, 04, 05, 06) de la FCCU (18) duquel l'au moins un signal de détection combiné indicatif de l'état de fonctionnement inattendu provient ;
l'accès (504, 512) aux données stockées (180, 1618, 1628) dans l'au moins une structure de données (402, 404) ;
sur la base des données ayant fait l'objet d'un accès, l'identification (314, 514) du dispositif électronique dans l'ensemble de dispositifs électroniques (12) produisant le signal de détection de statut de fonctionnement inattendu, et
la fourniture d'un signal de requête d'interruption (F) au dispositif électronique identifié dans l'ensemble de dispositifs électroniques (12) ;
dans lequel le stockage (180, 1618, 1628) de l'au moins une structure de données (402, 404) comprend :
le stockage d'une première structure de données (402) comprenant une liste ordonnée de canaux de traitement de signal (1610, 1612, 1614, 1620, 1622, 1624) associés aux canaux d'entrée (01, 02, 03, 04, 05, 06) de la FCCU (18) et une liste associée de pointeurs vers des structures de données dans un ensemble supplémentaire de structures de données (404), et
le remplissage des structures de données dans l'ensemble supplémentaire de structures de données (404) avec des données relatives à des canaux de traitement de signal (1610, 1612, 1614, 1620, 1622, 1624) et des circuits de détection (14) associés à chaque canal d'entrée (01, 02, 03, 04, 05, 06) de la FCCU (18).

2. Procédé selon la revendication 1, comprenant :
la réalisation d'une action de renvoi d'informations (19) par rapport au dispositif électronique identifié dans l'ensemble de dispositifs électroniques (12), l'action de renvoi d'informations (19) incluant au moins l'un parmi :
le fait d'ignorer le statut de fonctionnement inattendu, le rétablissement d'un état de fonctionnement attendu et le stockage du statut de fonctionnement inattendu.

3. Procédé selon la revendication 1 ou la revendication 2, dans lequel l'identification (502) du canal d'entrée de FCCU parmi l'ensemble de canaux d'entrée (01, 02, 03, 04, 05, 06) de la FCCU (18) duquel l'au moins un signal de détection combiné indicatif de l'état de fonctionnement inattendu provient comprend :
le stockage (180) des valeurs des signaux de détection logiquement combinés dans l'ensemble de signaux de détection logiquement combinés reçus au niveau de canaux d'entrée de FCCU respectifs dans l'ensemble de canaux d'entrée de FCCU (01, 02, 03, 04, 05, 06) ;
l'accès (502) à la valeur stockée (180) du signal d'état de fonctionnement inattendu et l'identification du canal d'entrée de FCCU dans l'ensemble de canaux d'entrée de FCCU (01, 02, 03, 04, 05, 06) couplé à l'au moins un signal de détection combiné dans l'ensemble de signaux de détection combinés qui est indicatif d'un état de fonctionnement inattendu des dispositifs électroniques dans l'ensemble de dispositifs électroniques (12).

4. Procédé selon l'une quelconque des revendications précédentes, dans lequel l'accès (504, 512, 512) aux données stockées (180, 1618, 1628) dans l'au moins une structure de données (402, 404) comprend :
sur la base de l'au moins une structure de données (402, 404), le fait d'identifier (504) quel canal de traitement de signal dans l'ensemble de canaux de traitement de signal (1610, 1612, 1614, 1620, 1622, 1624) est couplé au canal d'entrée de FCCU dans l'ensemble de canaux d'entrée de FCCU (01, 02, 03, 04, 05, 06) couplé à l'au moins un signal de détection combiné dans l'ensemble de signaux de détection combinés qui est indicatif d'un état de fonctionnement inattendu des dispositifs électroniques dans l'ensemble de dispositifs électroniques (12) ;
l'accès (512) à des données relatives à la manière dont des canaux de traitement de signal dans l'ensemble de canaux de traitement de signal (1610, 1612, 1614, 1620, 1622, 1624) sont couplés à l'ensemble de circuits de détection (14) ;
la collecte (514) des données ayant fait l'objet d'un accès qui correspondent au canal de traitement de signal couplé à la source d'erreur identifiée,
la fourniture (516) d'une structure de données indicative du couplage du dispositif électronique identifié dans l'ensemble de dispositifs électroniques (12) et de la source d'erreur identifiée.

5. Produit programme d'ordinateur comprenant des instructions qui, lorsque le programme est exécuté par un dispositif électronique (10, 12), amènent le dispositif électronique (10, 12) à mettre en œuvre le procédé selon l'une quelconque des revendications 1 à 4.

6. Système sur puce, SoC (10) comprenant :
un ensemble de circuits de détection (14) configuré pour être couplé à un ensemble de dispositifs électroniques (12) pour détecter à partir de ceux-ci un ensemble de signaux de détection (S₁, S₂) comprenant des signaux de détection indicatifs d'un état de fonctionnement de dispositifs électroniques dans l'ensemble de dispositifs électroniques (12) ;
une circuiterie de traitement de signal logique (16) couplée à l'ensemble de signaux de détection (S₁, S₂) via un ensemble de canaux de traitement de signal (1610, 1612, 1614, 1620, 1622, 1624), la circuiterie de traitement de signal logique (16) étant configurée pour fournir un ensemble de signaux de détection logiquement combinés,
dans lequel les signaux de détection logiquement combinés indiquent si l'état de fonctionnement des dispositifs électroniques dans l'ensemble de dispositifs électroniques (12) est un état de fonctionnement attendu ou un état de fonctionnement inattendu ;
une unité de collecte et de contrôle de défaillance, FCCU (18) couplée à la circuiterie de traitement de signal logique (16) pour recevoir des signaux de détection logiquement combinés dans l'ensemble de signaux de détection logiquement combinés au niveau de canaux d'entrée de FCCU dans un ensemble de canaux d'entrée de FCCU (01, 02, 03, 04, 05, 06) ;
au moins un ensemble de registres (180, 1618, 1628) stockant au moins une structure de données (402, 404) comprenant des données relatives à la manière dont l'ensemble de canaux d'entrée (01, 02, 03, 04, 05, 06) de la FCCU (18) sont couplés à l'ensemble de circuits de détection (14) via l'ensemble de canaux de traitement de signal (1610, 1612, 1614, 1620, 1622, 1624) ;
une circuiterie de traitement configurée pour, en réponse au fait qu'au moins un signal de détection combiné dans l'ensemble de signaux de détection combinés est indicatif d'un état de fonctionnement inattendu des dispositifs électroniques dans l'ensemble de dispositifs électroniques (12) :
identifier (502) le canal d'entrée de FCCU parmi l'ensemble de canaux d'entrée (01, 02, 03, 04, 05, 06) de la FCCU (18) duquel l'au moins un signal de détection combiné indicatif de l'état de fonctionnement inattendu provient ;
accéder (504, 512, 512) aux données stockées (180, 1618, 1628) dans l'au moins une structure de données (402, 404) ;
sur la base des données ayant fait l'objet d'un accès, identifier (314, 514) le dispositif électronique dans l'ensemble de dispositifs électroniques (12) produisant le signal de détection de statut de fonctionnement inattendu ;
fournir (516) un signal de requête d'interruption (F) au dispositif électronique identifié dans l'ensemble de dispositifs électroniques (12),
dans lequel l'au moins une structure de données (402, 404) stockée dans l'au moins un ensemble de registres (180, 1618, 1628) comprend une première structure de données (402) comprenant une liste ordonnée de canaux de traitement de signal (1610, 1612, 1614, 1620, 1622, 1624) associés aux canaux d'entrée (01, 02, 03, 04, 05, 06) de la FCCU (18) et une liste associée de pointeurs vers des structures de données dans un ensemble supplémentaire de structures de données (404),
dans lequel les structures de données dans l'ensemble supplémentaire de structures de données (404) sont remplies avec des données relatives à des canaux de traitement de signal (1610, 1612, 1614, 1620, 1622, 1624) et des circuits de détection (14) associés à chaque canal d'entrée de FCCU dans l'ensemble de canaux d'entrée de FCCU (01, 02, 03, 04, 05, 06).

7. SoC (10) selon la revendication 6, dans lequel ladite circuiterie de traitement est en outre configurée pour réaliser une action de renvoi d'informations (19) par rapport au dispositif électronique identifié dans l'ensemble de dispositifs électroniques (12), l'action de renvoi d'informations (19) incluant au moins l'un parmi : le fait d'ignorer le statut de fonctionnement inattendu, le rétablissement d'un état de fonctionnement attendu et le stockage du statut de fonctionnement inattendu.

8. SoC (10) selon la revendication 6 ou la revendication 7, dans lequel la circuiterie de traitement est en outre configurée pour, en réponse au fait qu'au moins un signal de détection combiné dans l'ensemble de signaux de détection combinés est indicatif d'un état de fonctionnement inattendu des dispositifs électroniques dans l'ensemble de dispositifs électroniques (12) :
identifier (502) le canal d'entrée de FCCU parmi l'ensemble de canaux d'entrée (01, 02, 03, 04, 05, 06) de la FCCU (18) duquel l'au moins un signal de détection combiné indicatif de l'état de fonctionnement inattendu provient comprend :
stocker (180) les valeurs des signaux de détection logiquement combinés dans l'ensemble de signaux de détection logiquement combinés reçus au niveau de canaux d'entrée de FCCU respectifs dans l'ensemble de canaux d'entrée de FCCU (01, 02, 03, 04, 05, 06) ;
accéder (502) à la valeur stockée (180) du signal d'état de fonctionnement inattendu et identifier le canal d'entrée de FCCU dans l'ensemble de canaux d'entrée de FCCU (01, 02, 03, 04, 05, 06) couplé à l'au moins un signal de détection combiné dans l'ensemble de signaux de détection combinés qui est indicatif d'un état de fonctionnement inattendu des dispositifs électroniques dans l'ensemble de dispositifs électroniques (12).

9. SoC (10) selon l'une quelconque des revendications 7 à 8, dans lequel la circuiterie de traitement est en outre configurée pour, en réponse au fait qu'au moins un signal de détection combiné dans l'ensemble de signaux de détection combinés est indicatif de l'état de fonctionnement inattendu des dispositifs électroniques dans l'ensemble de dispositifs électroniques (12) :
sur la base de l'au moins une structure de données (402, 404), identifier (504) quel canal de traitement de signal dans l'ensemble de canaux de traitement de signal (1610, 1612, 1614, 1620, 1622, 1624) est couplé au canal d'entrée de FCCU dans l'ensemble de canaux d'entrée de FCCU (01, 02, 03, 04, 05, 06) couplé à l'au moins un signal de détection combiné dans l'ensemble de signaux de détection combinés qui est indicatif de l'état de fonctionnement inattendu des dispositifs électroniques dans l'ensemble de dispositifs électroniques (12) ;
accéder (512) à des données relatives à la manière dont des canaux de traitement de signal dans l'ensemble de canaux de traitement de signal (1610, 1612, 1614, 1620, 1622, 1624) sont couplés à l'ensemble de circuits de détection (14) ;
collecter (514) les données ayant fait l'objet d'un accès qui correspondent au canal de traitement de signal couplé à la source d'erreur identifiée,
fournir (516) une structure de données indicative du couplage du dispositif électronique identifié dans l'ensemble de dispositifs électroniques (12) et de la source d'erreur identifiée.

10. Véhicule (V), comprenant :
un système sur puce, SoC (10) selon l'une quelconque des revendications 6 à 9,
un ensemble de dispositifs électroniques (12) couplés au SoC (10) ;
un ensemble d'actionneurs configurés pour faire fonctionner le véhicule (V) sur la base de signaux (F, D) échangés entre l'ensemble de dispositifs électroniques (12) et le SoC (10).
